# EUROPEAN PATENT APPLICATION

(11) **EP 2 990 729 A1**
(43) Date of publication of application: **02.03.2016**
(21) Application number: 15180309.5
(22) Date of filing: 07.08.2015
(51) Int. Cl.: F23R 3/56

(54) **COMBUSTION SYSTEM**

(30) Priority: 25.08.2014 US 201462041365 P
(71) Applicant: Rolls-Royce North American Technologies, Inc., Indianapolis, IN 46241 (US)
(72) Inventor: RESS, Jr, Robert A., Carmel, IN 46032 (US); HOLDCRAFT, John D., Carmel, IN 46033 (US)
(74) Representative: Dauncey, Mark Peter

(57) **Abstract**

A combustion system for gas turbine engine is disclosed. The combustion system includes a wave rotor drum and a drive coupled to the wave rotor drum. The wave rotor drum is mounted for rotation about an axis and is formed to include a plurality of combustion channels that extend along the axis to conduct transient waves along the axis during operation of the combustion system. The drive is coupled to the wave rotor drum and is adapted to drive rotation of the wave rotor drum about the axis.

## Description

### CROSS-REFERENCE TO RELATED APPLICATIONS

This application claims priority to and the benefit of U.S. Provisional Patent Application 62/041,365, filed 25 August 2014, the disclosure of which is now expressly incorporated herein by reference.

### STATEMENT REGARDING FEDERALLY SPONSORED RESEARCH OR

### DEVELOPMENT

Embodiments of the present disclosure were made with government support from DARPA under Contract No. HR0011-09-C-0053. The government may have certain rights.

### FIELD OF THE DISCLOSURE

The present disclosure relates generally to combustion systems, and more specifically to constant volume combustion systems.

### BACKGROUND

Improvement in the fuel economy of gas turbine engines is an area of interest for commercial and military flight as flight speeds increase into the supersonic range. In order to address fuel consumption goals there will be continued engineering advancements in compressor and turbine aerodynamics, higher temperature materials, improved cooling schemes, along with the utilization of lightweight materials. Another approach for improving fuel consumption is the use of combustion systems incorporating wave rotor technologies.

Wave rotors have been studied by engineers and scientists and thought of as suitable for a propulsion system. Wave rotors are a class of machines utilizing transient internal fluid flow to efficiently accomplish a desired flow process. Wave rotors depend on wave phenomena as the basis of their operation, and these wave phenomena have the potential to be exploited in propulsion systems to provide benefits such as higher specific power and lower specific fuel consumption.

Typically, flow moving through a wave rotor is contained in a plurality of channels formed by a rotor drum. The rotor drum is turned about an axis at a specific rate of speed so that the channels of the rotor drum receive compressed air and fuel at a first end and then discharge exhaust products of fuel combustion at a second end. Such rotor drums are sometimes turned by internal drives arranged within the rotor drum. Internal drives can be difficult to manufacture, assemble, and repair since they are accessible only from the ends of the rotor drum.

### SUMMARY

The present disclosure may comprise one or more of the following features and combinations thereof.

According to one aspect of the present disclosure, a combustion system for a gas turbine engine is described. The combustion system may include a wave rotor drum mounted for rotation about an engine axis. The wave rotor drum may be formed to include a plurality of combustion channels that extend along the engine axis to conduct transient waves along the axis generated during operation of the combustion system.

In some embodiments, the combustion system may include an external drive coupled to the wave rotor drum and adapted to drive rotation of the wave rotor drum about the engine axis. The external drive may include an outer ring gear that extends around an outer diameter of the wave rotor drum.

In some embodiments, the external drive may include a motor coupled to the outer ring gear to drive rotation of the outer ring gear about the engine axis. The external drive may include a drive gear coupled to an output shaft that extends from the motor to rotate about a drive axis along with the output shaft. The drive axis may be spaced apart from the engine axis and is parallel to the engine axis.

In some embodiments, the combustion system may include a combustion case. The wave rotor drum and the outer ring gear may be housed in the combustion case. The motor may be arranged outside the combustion case so that the combustion case shields the motor from heat generated in the wave rotor drum during operation of the combustion system.

In some embodiments, the external drive may include a drive gear intermeshed with the outer ring gear. The drive gear may be coupled to an output shaft that extends from the motor to transmit rotation from the motor to the outer ring gear.

In some embodiments, the drive gear may be housed in the combustion case. The drive gear may be coupled to the output shaft that extends from the motor to rotate about the drive axis along with the output shaft. The output shaft may extend from outside the combustion case to inside the combustion case through an aperture formed in the combustion case.

In some embodiments, the wave rotor drum may include an inner tube wall that extends around the engine axis, an outer tube wall that extends around the inner tube wall, and a plurality of dividers distributed around the engine axis that each extend from the inner tube wall to the outer tube wall to define the plurality of combustion channels formed by the wave rotor drum. The outer ring gear may extend around the outer tube wall and may be engaged with the outer tube wall for rotation with the outer tube wall.

According to another aspect of the present disclosure, a system may include a wave rotor drum mounted for rotation about a central axis. The wave rotor drum may be formed to include a plurality of channels spaced apart from the central axis that extend along the central axis.

In some embodiments, the system may also include an external drive. The external drive may be coupled to the wave rotor drum and may be adapted to drive rotation of the wave rotor drum about the central axis. The external drive may include an outer ring gear that extends around an outer diameter of the wave rotor drum.

In some embodiments, the external drive may include a drive gear intermeshed with the outer ring gear and a motor coupled to the drive gear to drive rotation of the drive gear and the outer ring gear. The drive gear may be coupled to an output shaft that extends from the motor to rotate with the output shaft about a drive axis. The drive axis may be spaced apart from the central axis and may be parallel to the central axis axis.

In some embodiments, the system may include a case that houses the wave rotor drum and the outer ring gear. The external drive may include a motor coupled to the outer ring gear to drive rotation of the outer ring gear. The motor may be arranged outside the case.

In some embodiments, the external drive may include a drive gear intermeshed with the outer ring gear. The drive gear may be coupled to an output shaft that extends from the motor to transmit rotation from the motor to the outer ring gear. The drive gear may be housed in the case. The output shaft may extend from outside the case to inside the case through an aperture formed in the case.

According to another aspect of the present disclosure, a method of assembling a combustion system is taught. The method may include mounting a wave rotor drum and an outer ring gear in a combustion case for rotation about an axis.

In some embodiments, the method may include coupling an outer ring gear to the wave rotor drum so that the outer ring gear extends around an outer diameter of the wave rotor drum. The method may also include intermeshing a drive gear spaced radially apart from the wave rotor drum with the outer ring gear coupled to the wave rotor drum.

In some embodiments, the method may also include coupling a motor to the drive gear so that rotation from the motor is transmitted to the outer ring gear from the drive gear. Coupling the motor to the drive gear may include inserting an output shaft that extends from the motor through an aperture formed in a combustion case into the drive gear.

These and other features of the present disclosure will become more apparent from the following description of the illustrative embodiments.

### BRIEF DESCRIPTION OF THE DRAWINGS

Fig. 1 is a perspective view of a gas turbine engine cut away to show that the gas turbine engine includes a wave rotor combustion system;
Fig. 2 is a perspective view of components included in the wave rotor combustion system showing that the wave rotor combustion system has a wave rotor drum and an external drive adapted to turn the rotor drum;
Fig. 3 is an exploded perspective view of the components shown in Fig. 2 showing that the external drive includes an outer ring gear attached to the outer diameter of the wave rotor drum, a drive gear intermeshed with the outer ring gear, and a motor coupled to the drive gear; and
Fig. 4 is a side elevation view of the components shown in Figs. 2 and 3 showing that the wave rotor drum is mounted for rotation about an engine axis and that the driven gear is mounted for rotation about a drive axis that is parallel to the engine axis.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

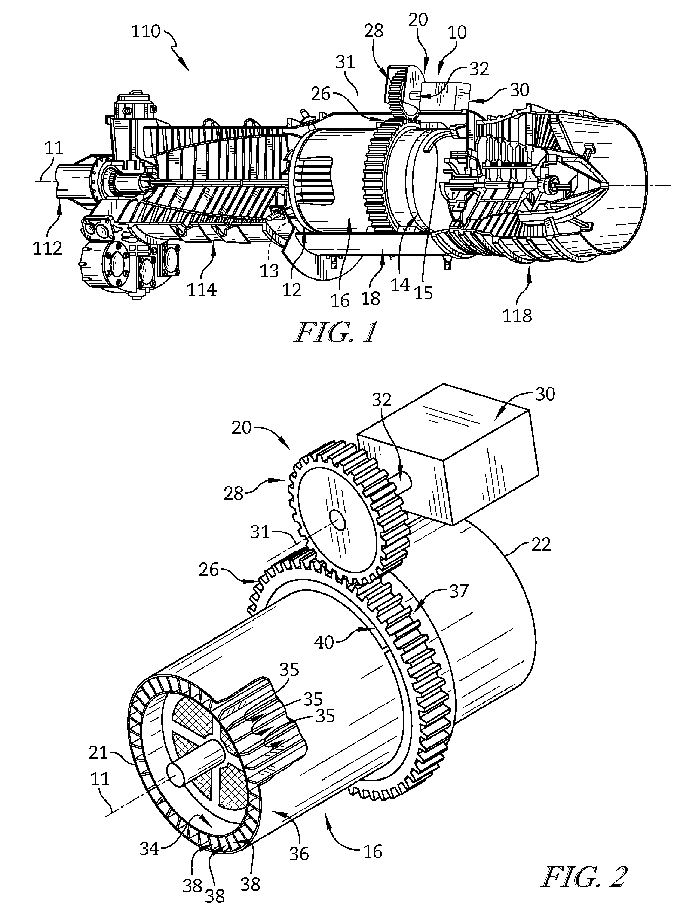

The arrangement of an illustrative combustion system 10 in a gas turbine engine 110 is shown in Fig. 1. The gas turbine engine 110 includes an output shaft 112, a compressor 114, the combustion system 10, and a turbine 118. The output shaft 112 is driven by the turbine 118 and may be coupled to a propeller, a fan, a gearbox, an electrical generator, a pump, or another driven device. The compressor 114 compresses and delivers air to the combustion system 10. The combustion system 10 mixes fuel with the compressed air received from the compressor 114 and ignites the fuel. The hot, high pressure products of the combustion reaction in the combustion system 10 are directed into the turbine 118 and the turbine 118 extracts work to drive the compressor 114 and the output shaft 112.

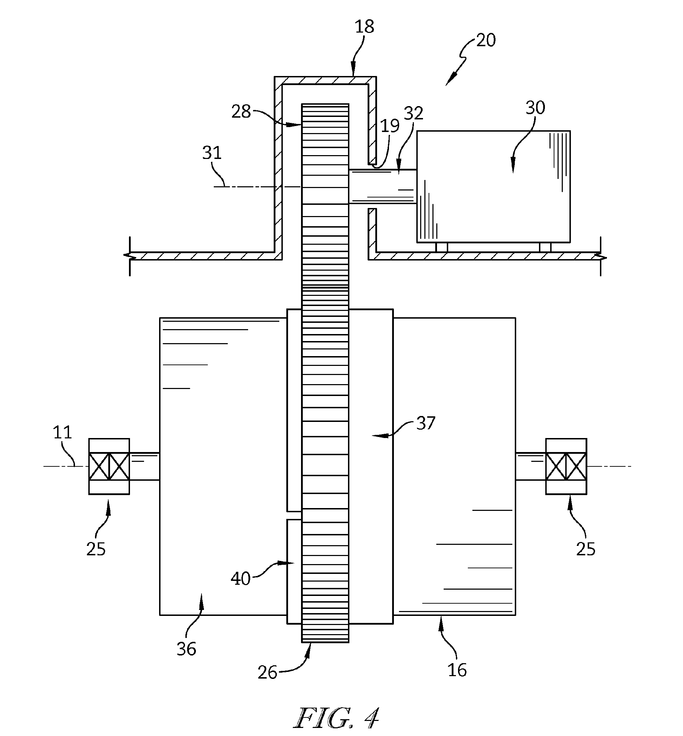

The combustion system 10 illustratively includes an inlet plate 12, an outlet plate 14, a wave rotor drum 16, and a combustion case 18 as shown in Fig. 1. The inlet plate 12 is arranged at an axially forward end 21 of the wave rotor drum 16 and is formed to include an inlet aperture 13 through which compressed air and fuel is delivered into the wave rotor drum 16. The outlet plate 14 arranged at an axially aft end 22 of the wave rotor drum 16 and is formed to include an outlet aperture 15 through which high pressure exhaust is discharged to drive the turbine 118. The wave rotor drum 16 is illustratively mounted on bearings 25 for rotation relative to the plates 12, 14 and the combustion case 18 about a central engine axis 11 as shown in Fig. 4.

In the illustrative embodiment, the combustion system 10 also includes an external drive 20 adapted to drive rotation of the wave rotor drum 16 as shown in Figs. 1-4. The external drive 20 illustratively includes an outer ring gear 26, a drive gear 28, and a motor 30. The outer ring gear 26 extends around an outer diameter of the wave rotor drum 16 and is coupled to the wave rotor drum 16 for rotation with the wave rotor drum 16. The drive gear 28 is spaced radially outward of the wave rotor drum 16 and is intermeshed with the outer ring gear 26. The motor 30 is also spaced radially outward of the wave rotor drum 16 and is coupled to the drive gear 28 via an output shaft 32 to transmit rotation to the gears 26, 28 and the wave rotor drum 16.

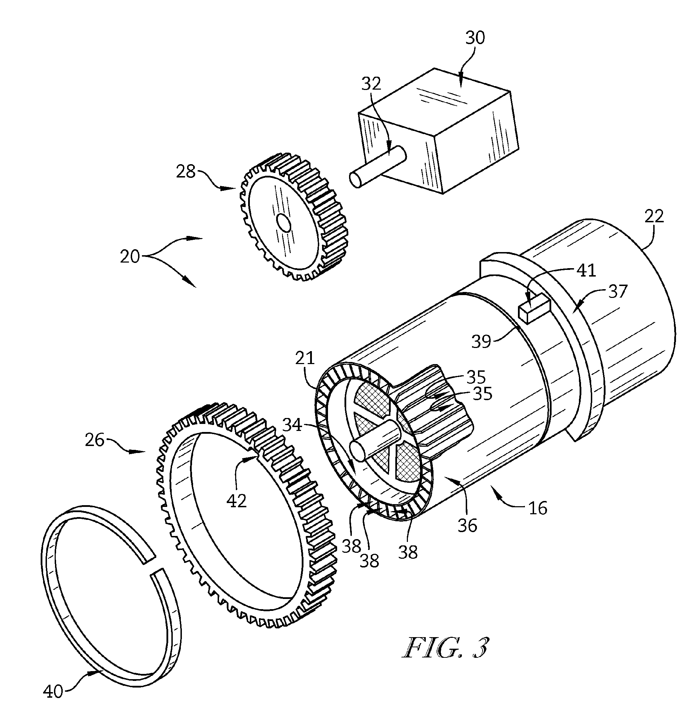

The wave rotor drum 16 illustratively forms a plurality of combustion channels 35 arranged circumferentially around the engine axis 11 as shown in Figs. 2 and 3. The combustion channels 35 extend along the engine axis 11 to conduct compressed air, fuel, combustion products, and exhaust through the combustion system 10 in a manner so as to induce waves within the combustion channels 35 that improve the efficiency of combustion within the combustion system 10. In the illustrative embodiment, the channels 35 are parallel to the engine axis 11 but in other embodiments may be curved or otherwise angled while still extending along the engine axis 11.

The wave rotor drum 16 illustratively includes an inner tube wall 34, an outer tube wall 36, and a plurality of dividers 38 as shown in Figs. 2 and 3. The inner tube wall 34 extends around the engine axis 11. The outer tube wall 36 is spaced apart from and extends around the inner tube wall 34. The plurality of dividers 38 are distributed around the engine axis 11 and each divider 38 extends from the inner tube wall 34 to the outer tube wall 36 to define the plurality of combustion channels 35 formed by the wave rotor drum 16.

The outer ring gear 26 of the external drive 20 is coupled to the outer tube wall 36 of the wave rotor drum 16 so that the wave rotor drum 16 rotates with the outer ring gear 26 as suggested in Figs. 2 and 3. In the illustrative embodiment, the outer ring gear 26 is located axially along the wave rotor drum 16 by a shoulder 37 that extends outwardly in the radial direction from the outer tube wall 36 of the wave rotor drum 16 and by a split ring 40 that is received in a slot 39 formed in the outer tube wall 36 of the wave rotor drum 16. The outer ring gear 26 is further engaged with the wave rotor drum 16 by a key 41 that extends outwardly from the outer tube wall 36 of the wave rotor drum 16 received in a keyway 42 formed in the outer ring gear 26 to couple the outer ring gear 26 and the wave rotor drum 16 together for rotation. In other embodiments, the outer ring gear 26 may be integrated into the outer tube wall 36 or may be coupled to the outer tube wall 36 by other suitable means.

The drive gear 28 is located radially outward of the wave rotor drum 16 and in the illustrative embodiment is directly coupled to the output shaft 32 for rotation with the output shaft 32 as shown in Fig. 2. The drive gear 28 is driven to rotate about a drive axis 31 coextensive with output shaft 32 as shown in Fig. 2. Drive axis 31 is illustratively spaced apart from and parallel to engine axis 11.

The motor 30 is illustratively an electric motor configured to power rotation of the wave rotor drum 16 at a predetermined rate based on engine 110 operating conditions. In the illustrative embodiment, the motor 30 is controlled by an electronic controller (not shown) and powered by a generator (not shown) integrated into the engine 110. In some embodiments, the motor 30 may be powered by a battery (not shown) during engine startup or throughout engine operations.

In the illustrative embodiment, the motor 30 is arranged outside the combustion case 18 so that the combustion case 18 shields the motor 30 from heat generated in the wave rotor drum 16 during operation of the combustion system 10 as shown in Fig. 1. The wave rotor drum 16, the outer ring gear 26, and the drive gear 28 are illustratively housed in the combustion case 18. The output shaft 32 extends from outside the combustion case 18 into the drive gear 28 inside the combustion case 18 through an aperture 19 formed in the combustion case 18. In some embodiments, the portion of the combustion case 18 that receives the drive gear 28 may be a separate case cover that is removably coupled to a main combustor case included in the combustion case.

In some embodiments, additional gears may be added to the external drive 20 and may be selectively engaged between the drive gear 28 and the outer ring gear 26 to provide various torque transmission paths from the motor 30 to the waver rotor drum 16. Each gear of the system may be easily inspected for damage and external gears may be easily replaced. Further, each component of the external drive 20 is arranged radially outward of the combustion channels 35 and may therefore be cooled and/or shielded from high temperatures in the combustion channels 35.

The combustion system 10 may be assembled by a method including coupling the outer ring gear 26 to the wave rotor drum 16 so that the outer ring gear 26 extends around an outer diameter of the wave rotor drum 16. The method may also include mounting the wave rotor drum 16 and outer ring gear 26 in the combustion case 18 for rotation about the engine axis 11. The method may further include intermeshing the drive gear 28 with the outer ring gear 26.

The method of assembling the combustion system 10 may include coupling the motor 30 to the drive gear 28 so that rotation from the motor 30 is transmitted to the outer ring gear 26 from the drive gear 28. Coupling the motor 30 to the drive gear 28 may include inserting the output shaft 32 that extends from the motor 30 through the aperture 19 formed in the combustion case 18 and into the drive gear 28.

According to a first aspect of the present invention there is provided a combustion system for gas turbine engines, the combustion system comprising a wave rotor drum mounted for rotation about an engine axis, the wave rotor drum formed to include a plurality of combustion channels that extend along the engine axis to conduct transient waves along the axis generated during operation of the combustion system, and an external drive coupled to the wave rotor drum and adapted to drive rotation of the wave rotor drum about the engine axis, the external drive including an outer ring gear that extends around an outer diameter of the wave rotor drum.

The external drive may include a motor coupled to the outer ring gear to drive rotation of the outer ring gear about the engine axis.

The external drive may include a drive gear coupled to an output shaft that extends from the motor to rotate about a drive axis along with the output shaft. The drive axis may be spaced apart from the engine axis and may be parallel to the engine axis.

The combustion system may further comprise a combustion case wherein the wave rotor drum and the outer ring gear are housed in the combustion case, and the motor is arranged outside the combustion case so that the combustion case shields the motor from heat generated in the wave rotor drum during operation of the combustion system. The external drive may include a drive gear intermeshed with the outer ring gear and the drive gear may be coupled to an output shaft that extends from the motor to transmit rotation from the motor to the outer ring gear. The drive gear may be housed in the combustion case. The drive gear may be coupled to the output shaft that extending from the motor to rotate about the drive axis along with the output shaft and the output shaft extends from outside the combustion case to inside the combustion case through an aperture formed in the combustion case.

In the combustion system according to the first aspect of the present invention the wave rotor drum may include an inner tube wall that extends around the engine axis, an outer tube wall that extends around the inner tube wall, and a plurality of dividers distributed around the engine axis that each extend from the inner tube wall to the outer tube wall to define the plurality of combustion channels formed by the wave rotor drum. The outer ring gear may extend around the outer tube wall and may be engaged with the outer tube wall for rotation with the outer tube wall.

According to a second aspect of the present invention there is provided a combustion system comprising a wave rotor drum mounted for rotation about a central axis, the wave rotor drum formed to include a plurality of channels spaced apart from the central axis that extend along the central axis, and an external drive coupled to the wave rotor drum and adapted to drive rotation of the wave rotor drum about the central axis, the external drive including an outer ring gear that extends around an outer diameter of the wave rotor drum.

The external drive may include a drive gear intermeshed with the outer ring gear and a motor coupled to the drive gear to drive rotation of the drive gear and the outer ring gear. The drive gear may be coupled to an output shaft that extends from the motor to rotate with the output shaft about a drive axis. The drive axis may be spaced apart from the central axis and may be parallel to the central axis.

The combustion system according to the second aspect of the present invention may further comprise a case that houses the wave rotor drum and the outer ring gear, wherein the external drive includes a motor coupled to the outer ring gear to drive rotation of the outer ring gear and the motor is arranged outside the case. The external drive may includes a drive gear intermeshed with the outer ring gear, the drive gear being coupled to an output shaft that extends from the motor to transmit rotation from the motor to the outer ring gear, and the drive gear being housed in the case. The output shaft may extend from outside the case to inside the case through an aperture formed in the case.

According to a third aspect of the present invention there is provided a method of assembling a combustion system, the method comprising coupling an outer ring gear to a wave rotor drum so that the outer ring gear extends around an outer diameter of the wave rotor drum, mounting the wave rotor drum and outer ring gear in a combustion case for rotation about an axis, and intermeshing a drive gear spaced radially apart from the wave rotor drum with the outer ring gear coupled to the wave rotor drum. The method may further comprise coupling a motor to the drive gear so that rotation from the motor is transmitted to the outer ring gear from the drive gear. Coupling the motor to the drive gear may include inserting an output shaft that extends from the motor through an aperture formed in a combustion case into the drive gear.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure are desired to be protected.

## Claims

1. A combustion system for gas turbine engines, the combustion system comprising
a wave rotor drum mounted for rotation about an engine axis, the wave rotor drum formed to include a plurality of combustion channels that extend along the engine axis to conduct transient waves along the axis generated during operation of the combustion system, and
an external drive coupled to the wave rotor drum and adapted to drive rotation of the wave rotor drum about the engine axis, the external drive including an outer ring gear that extends around an outer diameter of the wave rotor drum.

2. The combustion system of claim 1, wherein the external drive includes a motor coupled to the outer ring gear to drive rotation of the outer ring gear about the engine axis.

3. The combustion system of claim 2, wherein the external drive includes a drive gear coupled to an output shaft that extends from the motor to rotate about a drive axis along with the output shaft.

4. The combustion system of claim 3, wherein the drive axis is spaced apart from the engine axis and is parallel to the engine axis.

5. The combustion system of claim 2, further comprising a combustion case wherein the wave rotor drum and the outer ring gear are housed in the combustion case, and the motor is arranged outside the combustion case so that the combustion case shields the motor from heat generated in the wave rotor drum during operation of the combustion system.

6. The combustion system of claim 5, wherein the external drive includes a drive gear intermeshed with the outer ring gear and the drive gear is coupled to an output shaft that extends from the motor to transmit rotation from the motor to the outer ring gear.

7. The combustion system of claim 6, wherein the drive gear is housed in the combustion case, optionally wherein the drive gear is coupled to the output shaft that extends from the motor to rotate about the drive axis along with the output shaft and the output shaft extends from outside the combustion case to inside the combustion case through an aperture formed in the combustion case.

8. The combustion system of claim 1, wherein the wave rotor drum includes an inner tube wall that extends around the engine axis, an outer tube wall that extends around the inner tube wall, and a plurality of dividers distributed around the engine axis that each extend from the inner tube wall to the outer tube wall to define the plurality of combustion channels formed by the wave rotor drum, optionally wherein the outer ring gear extends around the outer tube wall and is engaged with the outer tube wall for rotation with the outer tube wall.

9. A combustion system comprising
a wave rotor drum mounted for rotation about a central axis, the wave rotor drum formed to include a plurality of channels spaced apart from the central axis that extend along the central axis, and
an external drive coupled to the wave rotor drum and adapted to drive rotation of the wave rotor drum about the central axis, the external drive including an outer ring gear that extends around an outer diameter of the wave rotor drum.

10. The combustion system of claim 9, wherein the external drive includes a drive gear intermeshed with the outer ring gear and a motor coupled to the drive gear to drive rotation of the drive gear and the outer ring gear.

11. The combustion system of claim 10, wherein the drive gear is coupled to an output shaft that extends from the motor to rotate with the output shaft about a drive axis, optionally wherein the drive axis is spaced apart from the central axis and is parallel to the central axis.

12. The combustion system of claim 9, further comprising a case that houses the wave rotor drum and the outer ring gear, wherein the external drive includes a motor coupled to the outer ring gear to drive rotation of the outer ring gear and the motor is arranged outside the case.

13. The combustion system of claim 12, wherein the external drive includes a drive gear intermeshed with the outer ring gear, the drive gear is coupled to an output shaft that extends from the motor to transmit rotation from the motor to the outer ring gear, and the drive gear is housed in the case, optionally wherein the output shaft extends from outside the case to inside the case through an aperture formed in the case.

14. A method of assembling a combustion system, the method comprising
coupling an outer ring gear to a wave rotor drum so that the outer ring gear extends around an outer diameter of the wave rotor drum,
mounting the wave rotor drum and outer ring gear in a combustion case for rotation about an axis, and
intermeshing a drive gear spaced radially apart from the wave rotor drum with the outer ring gear coupled to the wave rotor drum.

15. The method of claim 14, further comprising coupling a motor to the drive gear so that rotation from the motor is transmitted to the outer ring gear from the drive gear, optionally wherein coupling the motor to the drive gear includes inserting an output shaft that extends from the motor through an aperture formed in a combustion case into the drive gear.
